# EUROPÄISCHE PATENTANMELDUNG

(11) **EP 2 456 168 A1**
(43) Veröffentlichungstag der Anmeldung: **23.05.2012**
(21) Anmeldenummer: 11009264.0
(22) Anmeldetag: 23.11.2011
(51) Int. Cl.: H04L 29/08

(54) **Fernwartungssystem für Geräte**

(30) Priorität: 23.11.2010 DE 102010052054
(71) Anmelder: ADS-TEC GMBH, 70771 Leinfelden-Echterdingen (DE)
(72) Erfinder: Speidel, Thomas, D-71076 Markgröningen (DE); Pfendtner, Steffen, D-72631 Alchtal (DE); Bossler, Armin, D-73240 Wendlingen (DE)
(74) Vertreter: Wasmuth, Rolf

(57) **Zusammenfassung**

Die Erfindung betrifft ein Fernwartungssystem für in einem lokalen Netzwerk (18) eingebundene Steuerungen (17), embedded Controller (19), PC basierte Systeme oder dgl. Steuerungen und dgl.. Das lokale Netzwerk (18) ist über einen lokalen Agenten (23) mit einem entfernt stehenden, virtuellen Agenten (26) verbunden, wobei die Kommunikationsverbindung (4) über ein externes Netzwerk (21) und einen zentralen Agenten (22) hergestellt ist. Auf ein Startsignal stellt der lokale Agent (23) eine Kommunikationsverbindung (4) mit dem zentralen Agenten (22) her, wobei der lokale Agent (23) nach Aufbau der Verbindung seine eindeutige Identifikation an den zentralen Agenten (22) ausgibt und der zentrale Agent (22) einen dem anfragenden lokalen Agenten (23) entsprechenden virtuellen Agenten (26) startet. Der virtuelle Agent (26) stellt mit vom lokalen Agenten (23) übermittelten Kenndaten eine Kommunikationsverbindung (4) zum anfragenden lokalen Agenten (23) und dem im lokalen Netzwerk (18) eingebundenen Gerät (20) her.

## Beschreibung

Die Erfindung betrifft ein Fernwartungssystem für eine Vielzahl von unterschiedlichen Geräten mittels eines zentralen Agenten, der als Fernwartungsportal eine Kommunikationsverbindung zwischen einem lokalen Agenten des zu wartenden Geräts und einem entfernt stehenden, virtuellen Agenten aufbaut.

Werden in einem Fernwartungssystem eine Vielzahl von Geräten wie Steuerungen, embedded Controller, PC basierte Systeme oder dgl. bedient, muss der auf ein Gerät zugreifende Servicetechniker zunächst wissen, mit welchem Gerät er kommunizieren soll; er muss dann auf seinem PC, Laptop oder Servicecomputer für die auszuführende Fernwartung des Gerätes eine gerätespezifische Anwendungsumgebung konfigurieren. Dies ist aufwändig, insbesondere dann, wenn ein Servicetechniker innerhalb eines Serviceintervalls mehrere unterschiedliche Geräte wie z.B. unterschiedliche Maschinensteuerungen zu warten hat.

Der Erfindung liegt die Aufgabe zugrunde, ein Fernwartungssystem für eine Vielzahl von unterschiedlichen Geräten derart auszulegen, dass ein sicherer, schneller Zugriff auf das Gerät zur Ausführung von Wartungsaufgaben möglich ist.

Die Aufgabe wird nach den Merkmalen des Anspruchs 1 gelöst.

Das erfindungsgemäße Fernwartungssystem ist für in einem lokalen Netzwerk eingebundene Geräte wie Steuerungen, embedded Controller, PC basierte Systeme oder dgl. Steuerungen vorgesehen, wobei das lokale Netzwerk über einen lokalen Agenten mit einem entfernt stehenden, virtuellen Agenten verbunden wird. Die Kommunikationsverbindung erfolgt über ein externes Netzwerk, z.B. dem Internet, über das ein zentraler Agent als Fernwartungsportal angerufen wird. Dazu wird auf ein Startsignal der lokale Agent eine Kommunikationsverbindung mit dem zentralen Agenten herstellen, wobei der lokale Agent nach Aufbau der Verbindung seine eindeutige Identifikation an den zentralen Agenten ausgibt. Sind die Identifikationsdaten eindeutig und zulässig, wird der zentrale Agent einen dem anfragenden lokalen Agenten entsprechenden virtuellen Agenten starten, der mit vom lokalen Agenten übermittelten Kenndaten eine Kommunikationsverbindung zum lokalen Agenten und dem im lokalen Netzwerk eingebundenen Gerät herstellt. Die für eine Wartung notwendige Daten- und Kommunikationsverbindung zwischen einem lokalen Agenten und dem im internen Netzwerk angeschlossenen Gerät sowie dem Service-PC des Servicetechnikers über den virtuellen Agenten ist hergestellt. Initiiert vom Fernwartungsserver als zentralem Agenten wird der virtuelle Agent mit den zugeordneten Startwerten hochgefahren, so dass ein Servicetechniker mit einem Service-PC über den virtuellen Agenten auf das zu wartende Gerät zugreifen kann.

Vorteilhaft wird der Aufbau der Kommunikationsverbindung zwischen dem lokalen Agenten und dem entfernt stehenden, virtuellen Agenten mit einer Anzeige am lokalen Agenten und vorteilhaft am virtuellen Agenten angezeigt.

In einer Hardwarekonfiguration ist der zentrale Agent aus einem Fernwartungsserver gebildet, der als Fernwartungsportal über den lokalen Agenten eine Kommunikationsverbindung mit einem zu wartenden Gerät aufbaut. Auf dem Fernwartungsserver ist mindestens ein virtueller Agent z. B. als Gateway oder Router abgebildet, der über die aufgebaute Kommunikationsverbindung über den lokalen Agenten mit dem zu wartenden Gerät kommuniziert. Jedem zu wartenden Gerät ist eine gerätespezifische Anwendungsumgebung zugeordnet, wobei jede gerätespezifische Anwendungsumgebung auf einem der Anwendungsumgebung zugeordneten PC-Client geladen ist. Der PC-Client ist entsprechend seiner konfigurierten Anwendungsumgebung einem ausgewählten Gerät zugeordnet und greift über den virtuellen Agenten auf das Gerät zu. Nach Aufbau einer Kommunikationsverbindung zwischen dem Fernwartungsserver und dem zu wartenden Gerät verbindet der Fernwartungsserver den aufrufenden lokalen Agenten mit dem zugeordneten virtuellen Agenten. Zunächst wird jedem Gerät eine gerätespezifische Anwendungsumgebung zugeordnet, um dann jede spezifische Anwendungsumgebung auf einem der Anwendungsumgebung zugeordneten PC-Client zu konfigurieren und zu laden. Jeder so konfigurierte PC-Client wird entsprechend seiner konfigurierten Anwendungsumgebung über den virtuellen Agenten einem ausgewählten Gerät zugeordnet. Nach Aufbau einer Kommunikationsverbindung zwischen dem Fernwartungsserver und dem lokalen Agenten mit dem zu wartenden Gerät wird der Fernwartungsserver den dem aufrufenden Gerät zugeordneten PC-Client mit dem zu wartenden Gerät verbinden. Der Servicetechniker kann ohne weitere Verzögerung die notwendigen Servicearbeiten über den virtuellen Agenten ausführen, da sowohl die Kommunikation als auch eine gerätespezifische Anwendungsumgebung nach Aufbau der Kommunikationsverbindung vorliegt.

Nach der bevorzugten Ausgestaltung der Erfindung ist der virtuelle Agent im Fernwartungsserver abgebildet.

Um die Leistung eines Fernwartungsservers nicht durch Aufrechterhalten einer Vielzahl von virtuellen Agenten oder Rechnern zu belasten, ist vorgesehen, dass ein zugeordneter virtueller Agent oder Rechner als PC-Client erst bei einer Anforderung durch den Fernwartungsserver gestartet und nach Ablauf der Servicearbeiten wieder heruntergefahren wird. Bei jeder Anforderung des Fernwartungsservers wird der zugeordnete virtuelle Agent oder Rechner neu gestartet, was zweckmäßig mit Default-Werten erfolgt, die jeweils dem anfordernden lokalen Agenten und dessen im Netzwerk eingebundenen Gerät zugeordnet sind.

Da eine Kommunikationsverbindung sowohl vom PC-Client über den virtuellen Agenten und den lokalen Agenten zum Gerät als auch von dem Gerät über den lokalen Agenten, das Fernwartungsportal (zentraler Agent) zum virtueller Agenten aufgebaut werden soll, ist vorteilhaft vorgesehen, dass die Kommunikationsverbindungen zwischen dem Fernwartungsserver als zentralen Agenten und den verschiedenen lokalen Agenten der Geräte und den virtuellen Agenten jeweils gleich ist. Somit kann das Fernwartungsportal als zentraler Agent mit jedem anfragenden lokalen Agenten und dessen im lokalen Netzwerk angebundenen Gerät sofort eine Kommunikationsverbindung aufbauen, ohne zunächst zu wissen, welches Gerät die Fernwartungsanfrage initiiert hat. Nach Aufbau der Kommunikationsverbindung werden zwischen dem Gerät und dem Fernwartungsserver (zentraler Agent) der zu wartende Gerätetyp und der Grund der Anfrage ausgetauscht, so dass der Fernwartungsserver dann entsprechend der Anfrage reagieren kann.

Die Kommunikation zwischen einem PC-Client über den virtuellen Agenten und über einen lokalen Agenten mit dem angebundenen Gerät erfolgt zweckmäßig auf Basis von Remote-Protokollen wie Netcap, RDP, VNC oder dgl., wobei über die Kommunikationsverbindung in erster Linie Pixelsignale einer Anzeige sowie Steuerungssignale einer Tastatur und/oder eines Steuergerätes wie einer Maus übertragen werden. Dadurch ist ein hoher Sicherheitsstandard gegeben.

Wird die Kommunikationsverbindung als VPN-Verbindung aufgebaut, die insbesondere durch Firewalls hergestellt ist, ist ein Zugriff durch unbefugte Dritte weitgehend ausgeschlossen. Vorteilhafte VPN-Protokolle sind OpenVPN, CISCO VPN oder Check Point VPN.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Übersicht den prinzipiellen Aufbau eines Fernwartungssystems,
- Fig. 2: in schematischer Übersicht ein Ablaufprinzip zum Aufbau einer Kommunikationsverbindung,
- Fig. 3: in schematischer Übersicht den Aufbau eines Fernwartungssystems für eine Vielzahl von Geräten in einem lokalen Netzwerk mit einem Femwartungsportal,
- Fig. 4: ein Fernwartungssystem entsprechend Fig. 3 mit um virtuelle Rechner ergänzten Clients.

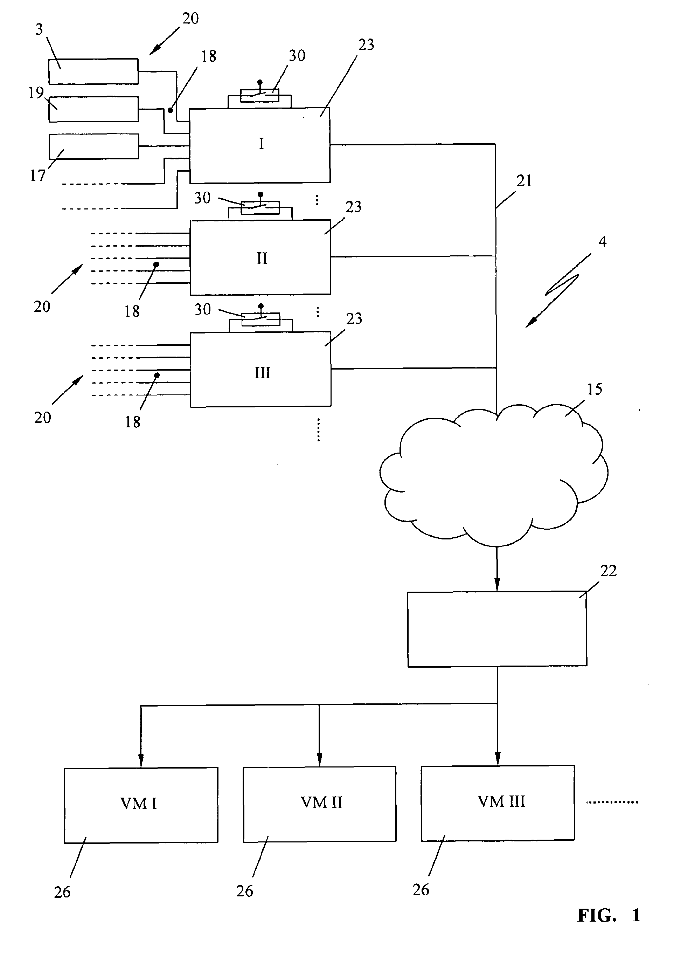

Fig. 1 gibt in schematischer Übersicht den prinzipiellen Aufbau eines erfindungsgemäßen Fernwartungssystems wieder. Über ein lokales Netzwerk 18, das z. B. ein TCP/IP-Netzwerk mit einem vorgegebenen Adressbereich von z. B. 192.168.0.0 bis 192.168.0.24 sein kann, sind Geräte 20 an einen lokalen Agenten 23 angeschlossen. Der lokale Agent ist durch einen Router, ein Gateway, einen PC-Client oder dgl. gebildet und dient dem Aufbau und der Ausführung der Kommunikation mit einem zentralen Agenten 22 bzw. virtuellen Agenten 26, der seinerseits als Router, Gateway, PC-Client oder dgl. ausgebildet sein kann, bevorzugt als virtuelle Maschine.

Die Geräte 20 können z. B. Steuerungen 17, embedded Controller 19, PC basierte Systeme wie Maschinensteuerungen 3 oder dgl. sein.

Die in einer beliebigen Anzahl vorgesehenen lokalen Agenten 23 sind mit einem externen Netzwerk 21 verbunden und stehen z. B. über das Internet 15 mit einem zentralen Agenten 22 in Verbindung, der ein Fernwartungsserver oder dgl. PC sein kann. Vom zentralen Agenten 22 werden — vorzugsweise im Fernwartungsserver — einer Anfrage entsprechende virtuelle Agenten 26 gestartet, die ihrerseits mit den lokalen Agenten 23 und einem zu wartenden Gerät 20 eine Kommunikationsverbindung aufbauen können.

In einem Netzwerk muss jedes Gerät eine eindeutige IP-Adresse haben. Da über das Fernwartungssystem mehrere lokale Netzwerke 18 über die lokalen Agenten 23 mit dem Fernwartungsserver als zentralen Agenten 22 verbunden werden können, muss gewährleistet sein, dass IP-Adressen nicht doppelt auftreten. Jedem lokalen Agenten I, II, III ist daher ein bestimmter virtueller Agent VM I, VM II, VM III zugeordnet, wobei z. B. der virtuelle Agent VM I dem lokalen Agenten I zugeordnet ist und die Route für das angeschlossene Netzwerk mit einem vorgegebenen Adressbereich bereitstellt. Entsprechend sind die weiteren virtuellen Rechner VM II und VM III den lokalen Agenten II und III zugeordnet.

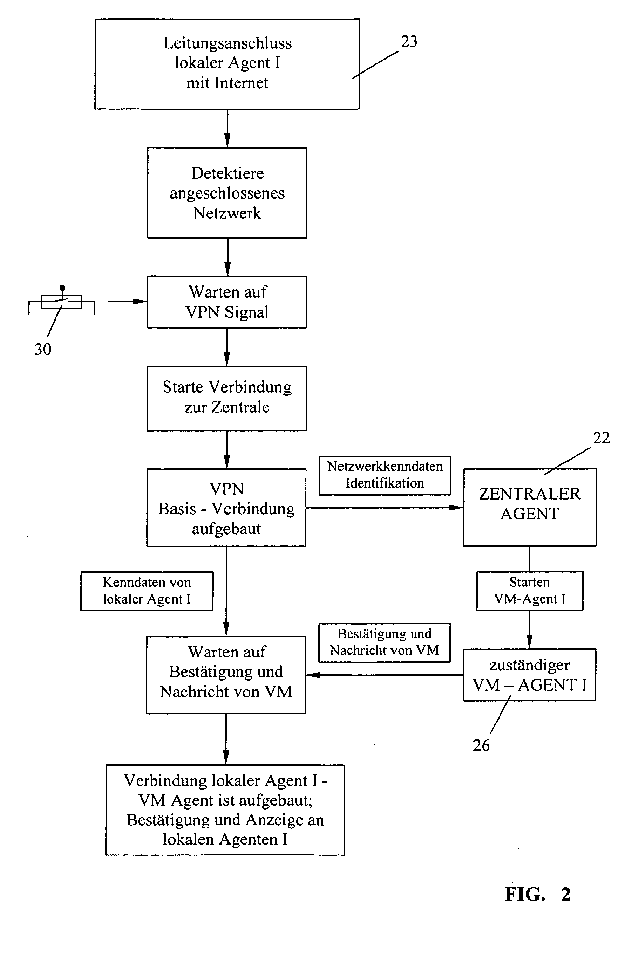

Fig. 2 zeigt in schematischer Übersicht ein Ablaufprinzip zum Aufbau einer Kommunikationsverbindung. So wird z. B. der lokale Agent I hardwaremäßig mit dem externen Netzwerk 21 verbunden, worauf der lokale Agent 23 das angeschlossene externe Netzwerk 21 detektiert und in Bereitschaft geht, um eine Kommunikationsverbindung, insbesondere eine VPN-Verbindung aufzubauen. Der lokale Agent 23 wartet auf ein entsprechendes VPN-Signal zum Aufbau einer Verbindung zum zentralen Agenten.

Jeder lokale Agent 23 ist mit einem Signalgeber 30 (Fig. 1) versehen, der in einfacher Ausführung ein mechanischer Schalter 30 bzw. Taster sein kann. Mit Schließen des Kontaktes im Schalter 30 wird ein VPN-Signal zum Start eines Signalaufbaus generiert. Der lokale Agent I startet die Verbindung zum zentralen Agenten 22 und baut mit diesem eine VPN-Basisverbindung auf. Hierzu werden Netzwerkkenndaten an den zentralen Agenten 22 ebenso übermittelt wie Daten zur Identifikation des anfragenden lokalen Agenten 23, im vorliegenden Beispiel des lokalen Agenten I.

Hat der zentrale Agent aufgrund der Netzwerkkenndaten und der Daten zur Identifikation des lokalen Agenten I einen erlaubten Verbindungsaufbau festgestellt, wird ein für den lokalen Agenten I zuständiger virtueller Agent VM-Agent I gestartet. Bis der virtuelle Agent VM-Agent I gestartet ist, wartet der lokale Agent I auf die Bestätigung und die Nachricht vom virtuellen VM-Agenten I. Ist der zuständige VM-Agent I gestartet und bereit, wird eine Bestätigung und Nachricht vom virtuellen Agenten VM-Agent I ausgegeben, worauf über die VPN-Basisverbindung die Kenndaten des lokalen Agenten I übermittelt werden. Für die Wartung wird nun eine Daten- und Kommunikationsverbindung zwischen dem lokalen Agenten I und dem zuständigen virtuellen Agenten VM-Agent I aufgebaut. Steht die Verbindung, wird über die Daten- und Kommunikationsverbindung eine Bestätigung und Anzeige generiert und am lokalen Agenten I angezeigt. Hierzu ist am lokalen Agenten 23 zweckmäßig eine geeignete LCD-Anzeige oder dgl. vorgesehen.

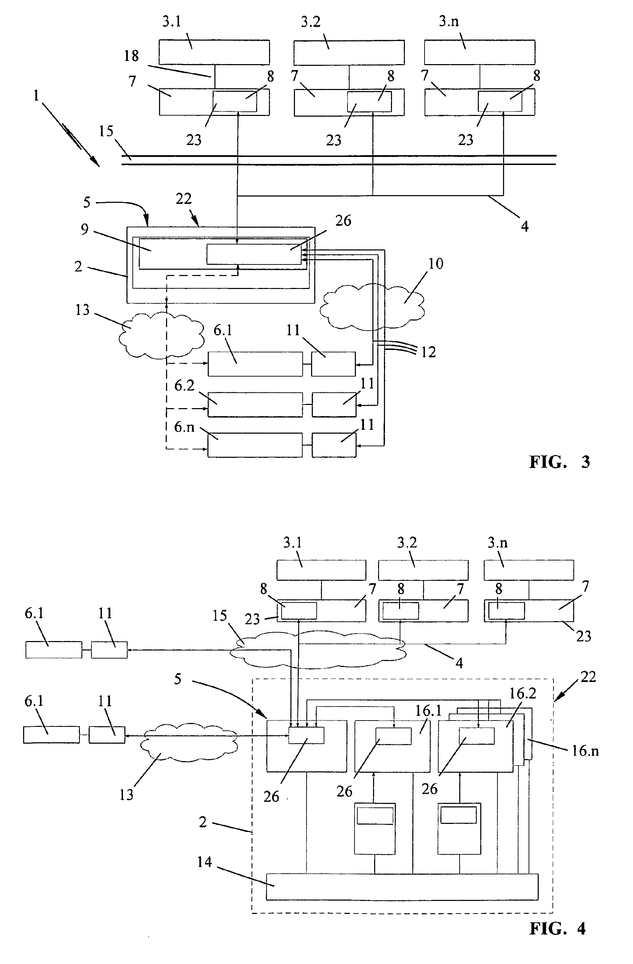

Die nachfolgenden Ausführungsbeispiele der Figuren 3 und 4 geben einen schematischen Überblick zu einem möglichen Hardwareaufbau eines erfindungsgemäßen Femwartungssystems als Portallösung wieder. Im lokalen Netzwerk 18 ist eine Vielzahl von z. B. Maschinensteuerungen 3.1, 3.2,... 3.n über jeweils einen lokalen Agenten 23 mit einem externen Netzwerk, z. B. dem Internet 15 verbindbar. Der lokale Agent 23 ist beispielhaft durch ein Gateway, einen Router oder einen Client ausgebildet, wobei eine aktive Firewall 7 zweckmäßig integriert ist. Die Verbindung der lokalen Agenten 23 erfolgt über ein Fernwartungsportal 5 bzw. einen Fernwartungsserver 2, der den zentralen Agenten 22 darstellt. Die vom Fernwartungsserver 2 zu startenden virtuellen Agenten 26 können beispielhaft durch ein Gateway, einen Router oder einen Client ausgebildet sein, wobei eine aktive Firewall 7 zweckmäßig integriert ist. Neben den virtuellen Agenten 26 können im Fernwartungsserver virtuelle Rechner wie PC-Clients 6.1, 6.2, ...6.n abgebildet sein.

Das Fernwartungssystem 1 umfasst den Fernwartungsserver 2, über den eine Vielzahl von Maschinensteuerungen 3.1, 3.2,... 3.n über lokale Agenten 23 mittels einer Kommunikationsverbindung 4 verbunden werden können. Der Fernwartungsserver 2 bildet ein Fernwartungsportal 5, über das eine Vielzahl von PC-Clients 6.1, 6.2, ... 6.n über virtuelle Agenten mit den Maschinensteuerungen 3.1, 3.2, ... 3.n verbunden sind.

Zum Aufbau einer sicheren Verbindung ist jeder lokale Agent 23 mit einer Firewall 7 ausgestattet, über die die Maschinensteuerung als Client 8 mit dem Fernwartungsserver 2 kommuniziert. In entsprechender Weise weist der Fernwartungsserver eine Firewall 9 auf, über die der Fernwartungsserver 2 als zentraler Agent eine sichere Verbindung mit einer Maschinensteuerung 3.1, 3.2 bis 3.n aufbaut.

Der Fernwartungsserver 2 als Fernwartungsportal 5 steht z. B. über ein Intranet 10 oder ggf. Internet mit PC-Clients 6.1, 6.2, 6.n in Verbindung, wobei wiederum zur Gewährleistung einer sicheren Verbindung jeder virtuelle Agent 26 oder PC-Client 6 über eine Firewall 11 mit den Kommunikationsleitungen 12 in Verbindung steht. Im dargestellten Ausführungsbeispiel nach Fig. 3 sind die Kommunikationsverbindungen über VPN-Verbindungen hergestellt, wobei sich die Firewalls 7 der Maschinensteuerung 3.1 bis 3.n aktiv zum Fernwartungsportal 9 verbinden. Entsprechend erfolgt eine VPN-Verbindung mit den PC-Clients 6.1 bis 6.n der Servicetechniker über den zugeordneten virtuellen Agenten. Das Übertragungsprotokoll für alle Kommunikationsverbindungen zwischen dem Fernwartungsserver 2 als zentraler Agent 22 und den verschiedenen lokalen Agenten 23 der Maschinensteuerungen 3.1 bis 3.n sowie den virtuellen Agenten 26 ist bevorzugt jeweils gleich und kann ein VPN-Protokoll wie OpenVPN, CISCO VPN oder Check Point VPN sein.

Die PC-Clients der Servicetechniker können über ein Intranet 13 und eine TCP/IP-Verbindung mit dem VPN-Server 2 als zentralem Agenten 22 kommunizieren.

Die Maschinensteuerungen 3.1, 3.2, 3.n bedürfen für den Remote-Zugriff durch einen Servicetechniker einer maschinenspezifischen Anwendungsumgebung auf dem Service-PC-Client 6.1 bis 6n. Nach der Erfmdung ist nun vorgesehen, dass jeder PC-Client 6.1, 6.2, 6.n eine bestimmte maschinenspezifische Anwendungsumgebung lädt, so dass jeder PC-Client 6.1 bis 6.n auf eine bestimmte Anwendungsumgebung spezialisiert ist. Auf eine aktive Anfrage einer Maschinensteuerung über den lokalen Agenten 23 beim Fernwartungsportal 5 (zentraler Agent 22) wird zunächst die Kommunikationsverbindung bevorzugt nach einem VPN-Protokoll über den virtuellen Agenten aufgebaut und zwischen dem Fernwartungsserver 2 (zentraler Agent 22) und dem lokalen Agenten 23 der anfragenden Maschinensteuerung - z. B. der Maschinensteuerung 3.2 - der zu wartende Maschinentyp und der Grund der Anfrage ausgetauscht. Eine derartige Fernwartungsanfrage muss vom Servicetechniker auf dem Fernwartungsportal 5 akzeptiert werden. Mit dem Akzeptieren der Fernwartungsanfrage wird durch das Fernwartungsportal eine zu konfigurierende Anwendungsumgebung für die auszuführende Fernwartung von dem Fernwartungsportal 5 bereitgestellt, d. h. ein der Anfrage entsprechender virtueller Agent 26 und/oder ein PC-Client - im Ausführungsbeispiel PC-Client 6.2 - wird an das Fernwartungsportal 5 angebunden, z. B. über einen sicheren VPN-Kanal mittels der Kommunikationsleitung 12 oder über das Intranet 13 per TCP/IP-Verbindung. Über den virtuellen Agenten 26 und den PC-Client 6.2 kann nun die angeforderte Wartung der Maschinensteuerung 3.2 erfolgen, wobei aufgrund der Verwendung von VPN-Übertragungsprotokollen eine sichere Verbindung gewährleistet ist.

Das Fernwartungsportal 5 kann aus einem oder mehreren VPN-Servern 2 (zentraler Agent 22) bestehen. Dabei dient das Fernwartungsportal 5 als Firewall für die Kommunikation zwischen den einzelnen VPN-Clients (lokale Agenten 23 und virtuelle Agenten 26), wobei die Kommunikationsmöglichkeiten zwischen den VPN-Clients per Konfiguration eingeschränkt werden können.

Die Kommunikation des Servicetechnikers vom PC-Client 6.1, 6.2, 6.n mit einer zugeordneten Maschinensteuerung 3.1, 3.2, 3.n erfolgt über Remote-Protokolle wie z. B. Netcap, RDP, VNC oder dgl. Protokolle. Dabei kann die Einstellung so vorgenommen werden, dass über die Kommunikationsverbindung ausschließlich Pixelsignale einer Anzeige und/oder Steuerungssignale einer Tastatur und/oder eines Steuergerätes wie einer Maus übertragen werden.

Es kann zweckmäßig sein, auf den PC-Clients 6.1, 6.2, 6.n Netzwerkfreigaben vorzusehen, über welche Daten und Dateien sowohl mit der zugeordneten Maschinensteuerung als auch mit anderen Clients ausgetauscht werden können.

Das Ausführungsbeispiel nach Fig. 4 entspricht im Grundaufbau dem nach Fig. 3, weshalb für gleiche Teile gleiche Bezugszeichen verwendet sind.

Sind im Ausführungsbeispiel nach Fig. 3 die PC-Clients 6.1, 6.2, 6.n ausschließlich als Hardware-Rechner ausgebildet, ist im Ausführungsbeispiel nach Fig. 4 vorgesehen, PC-Clients auch als virtuelle Rechner 16.1, 16.2, ... 16.n auszubilden. Ein derartiger virtueller Rechner ist im Fernwartungsserver 2 abgebildet, wobei erst bei einer Anforderung durch den Fernwartungsserver 2 ein zugeordneter virtueller Rechner 16.1, 16.2, 16.n als PC-Client gestartet wird. Um bei jedem Start eines PC-Clients 16.1, 16.2, 16.n eine gleiche Startkonfiguration zur Verfügung zu stellen, wird der virtuelle Rechner 16 mit Default-Werten gestartet. Diese Default-Werte sind in einem Virtualisierungsbaustein 14 vorgehalten, so dass bei jedem Start eines virtuellen Rechners die gleichen Grundvoraussetzungen gegeben sind. Jeder virtuelle Rechner ist als Client über einen virtuellen Agenten an den Fernwartungsserver 2 angebunden, und kommuniziert - bevorzugt unter Verwendung von Firewalls - über eine sichere Verbindung mit dem Fernwartungsportal 5. Der Start eines virtuellen Rechners 16., 16.2 bis 16.n und/oder eines zugeordneten virtuellen Agenten 26 erfolgt regelmäßig mit den Default-Werten, die der anfordernden Maschinensteuerung 3.1, 3.2 bis 3.n zugeordnet sind. Da sich die Maschinensteuerung am Fernwartungsportal 5 anmeldet und den Maschinentyp mitteilt, kann der Femwartungsserver 2 den erforderlichen virtuellen Rechner als PC-Client oder virtuellen Agenten 26 mit den Default-Werten starten, die eine der anfordernden Maschinensteuerung entsprechende maschinenspezifische Anwendungsumgebung gewährleisten.

Wie im Ausführungsbeispiel nach Fig. 3 beschrieben, können andere PC-Clients 6.1, 6.2 über Firewalls 11 sowohl über das Internet 15 als auch ein Intranet 13 mit dem Fernwartungsportal kommunizieren und entsprechend der auf dem PC-Client 6.1 bzw. 6.2 installierten Anwendungsumgebung über einen virtuellen Agenten 26 auf die eine oder andere Maschinensteuerung 3.1 bzw. 3.2 zugreifen.

## Patentansprüche

1. Fernwartungssystem für in einem lokalen Netzwerk (18) eingebundene Geräte (20) wie Steuerungen (17), embedded Controller (19), PC basierte Systeme oder dgl. Steuerungen, wobei das lokale Netzwerk (18) über einen lokalen Agenten (23) mit einem entfernt stehenden, virtuellen Agenten (26) verbunden ist, und die Kommunikationsverbindung (4) über ein externes Netzwerk (21) und einen zentralen Agenten (22) hergestellt ist, derart, dass auf ein Startsignal der lokale Agent (23) eine Kommunikationsverbindung (4) mit dem zentralen Agenten (22) herstellt, dass der lokale Agent (23) nach Aufbau der Verbindung seine eindeutige Identifikation an den zentralen Agenten (22) ausgibt und der zentrale Agent (22) einen dem anfragenden lokalen Agenten (23) entsprechenden virtuellen Agenten (26) startet, der mit vom lokalen Agenten (23) übermittelten Kenndaten eine Kommunikationsverbindung (4) zum lokalen Agenten (23) und dem im lokalen Netzwerk (18) eingebundenen Gerät (20) herstellt.

2. Fernwartungssystem nach Anspruch 1,
**dadurch gekennzeichnet, dass** der Aufbau der Kommunikationsverbindung (4) zwischen dem lokalen Agenten (23) und dem virtuellen Agenten (26) mit einer Anzeige am lokalen Agenten (23) angezeigt ist.

3. Fernwartungssystem nach Anspruch 1 oder 2,
**dadurch gekennzeichnet, dass** der zentrale Agent (22) aus einem Fernwartungsserver (2) gebildet ist, der als Fernwartungsportal (5) über den lokalen Agenten (23) eine Kommunikationsverbindung (4) mit einem zu wartenden Gerät (20) aufbaut, mit mindestens einem an dem Fernwartungsserver (2) angeschlossenen PC-Client (6.1, 6.2, 6.n) für den Zugriff auf den virtuellen Agenten (22), der über die aufgebaute Kommunikationsverbindung (4) über den lokalen Agenten (23) mit dem zu wartenden Gerät (20) kommuniziert, und jedem Gerät (20) eine gerätespezifische Anwendungsumgebung zugeordnet ist, dass jede gerätespezifische Anwendungsumgebung auf einem der Anwendungsumgebung zugeordneten PC-Client (6.1, 6.2, 6.n) geladen ist, dass der PC-Client (6.1, 6.2, 6.n) über den virtuellen Agenten (26) entsprechend seiner konfigurierten Anwendungsumgebung einem ausgewählten Gerät (20) zugeordnet ist, und nach Aufbau einer Kommunikationsverbindung (4) zwischen dem Fernwartungsserver (2) und dem zu wartenden Gerät der Fernwartungsserver (2) den aufrufenden lokalen Agenten (23) mit dem virtuellen Agenten (26) verbindet.

4. Fernwartungssystem nach Anspruch 3,
**dadurch gekennzeichnet, dass** der virtuelle Agent (26) als virtueller Rechner im Fernwartungsserver (2) abgebildet ist.

5. Fernwartungssystem nach Anspruch 3 oder 4,
**dadurch gekennzeichnet, dass** erst bei einer Anforderung durch den Femwartungsserver (2) ein zugeordneter virtueller Agent (26) gestartet wird.

6. Fernwartungssystem nach Anspruch 5,
**dadurch gekennzeichnet, dass** bei jeder Anforderung des Fernwartungsservers (2) der zugeordnete virtuelle Agent (26) mit Default-Werten neu gestartet wird, die dem anfordernden lokalen Agenten (23) und dessen im lokalen Netzwerk (18) eingebundenen Gerät (20) zugeordnet sind.

7. Fernwartungssystem nach einem der Ansprüche 1 bis 6,
**dadurch gekennzeichnet, dass** das Übertragungsprotokoll für die Kommunikationsverbindungen zwischen dem zentralen Agenten (22) und den verschiedenen lokalen Agenten (23) und den virtuellen Agenten (26) jeweils gleich ist.

8. Fernwartungssystem nach einem der Ansprüche 1 bis 7,
**dadurch gekennzeichnet, dass** über eine aufgebaute Kommunikationsverbindung zwischen einem lokalen Agenten (23) und dem zentralen Agenten (22) das zu wartende Gerät (20) und der Grund der Anfrage ausgetauscht werden.

9. Fernwartungssystem nach einem der Ansprüche 1 bis 8,
**dadurch gekennzeichnet, dass** die Kommunikation zwischen den virtuellen Agenten (26) und dem über einen lokalen Agenten (23) angebundenen Gerät (20) auf Basis von Remote-Protokollen wie Netcap, RDP, VNC oder dgl. ausgeführt ist.

10. Fernwartungssystem nach Anspruch 9,
**dadurch gekennzeichnet, dass** über die Kommunikationsverbindung (4) Pixelsignale einer Anzeige sowie Steuerungssignale einer Tastatur und/oder eines Steuergerätes wie einer Maus übertragen werden.

11. Fernwartungssystem nach einem der Ansprüche 1 bis 10,
**dadurch gekennzeichnet, dass** die Kommunikationsverbindung (4) eine VPN-Verbindung ist.

12. Fernwartungssystem nach einem der Ansprüche 1 bis 10,
**dadurch gekennzeichnet, dass** die Kommunikationsverbindung (4) eine TCP/IP-Verbindung ist.
